# EUROPEAN PATENT SPECIFICATION

(11) **EP 2 673 653 B1**
(45) Date of publication and mention of the grant of the patent: **04.11.2015**
(21) Application number: 12704243.0
(22) Date of filing: 26.01.2012
(51) Int. Cl.: G01S 5/00, G01S 5/02, B62D 65/00, G01S 5/18

(54) **LOCATION SYSTEM FOR DETERMINING THE POSITION OF AN OBJECT**
ORTUNGSSYSTEM ZUR BESTIMMUNG DER POSITION EINES OBJEKTES
SYSTÈME DE LOCALISATION POUR DÉTERMINER LA POSITION D'UN OBJET

(30) Priority: 10.02.2011 SE 1150105
(43) Date of publication of application: 18.12.2013
(73) Proprietor: Atlas Copco Industrial Technique AB, 105 23 Stockholm (SE)
(72) Inventor: WALLGREN, Carl JOHAN Erik, S-117 32 Stockholm (SE)
(74) Representative: Ekeberg, Lars Gunnar
(86) International application number: PCT/EP2012/051236
(87) International publication number: WO 2012/107300

(56) References cited:
- EP-A1- 2 138 861
- US-A- 5 898 379
- US-A1- 2004 254 675
- US-A1- 2007 040 687

## Description

The invention relates to a location system for determining the actual position in a three dimensional space of a movable object by means of a number of stationary signal communicating modules located in the space, and a movable signal communicating module carried on the object for communication with the stationary signal communicating modules. In a preferred embodiment, the invention concerns a location system for determining the actual position of a power tool movable in a three dimensional space between two or more working positions on a working object.

A location system of the above mentioned type is suitable for determining the actual position of a power wrench or nut runner used in assembly applications on car bodies. This type of system is based on an exchange of signals between a signal communicating module on the power wrench and stationary signal communicating modules, i.e. a remote indication of the actual individual distances between the power wrench and each one of a number of stationary signal communicating modules which are disposed in well defined positions in the space surrounding the power wrench. The different distance related signals are communicated to an evaluation and calculating unit for determining the position of the object in the three dimensional space. The signal communicating modules may be of any suitable type, for instance optically, acoustically or radio frequency based, and signals from each one of the signal communicating modules corresponding to the individual distances between the power wrench and the stationary signal communicating modules are communicated to an evaluation or analysing unit wherein the actual three dimensional position of the power wrench is calculated. One such system of this type includes a signal transmitting tag mounted on the power wrench and arranged to respond to an activation signal and emit signals to the stationary signal communicating modules.

Systems of this type are used in car body assembly line stations to ascertain whether specific screw joints on the car body have been attended to at all and whether they have been tightened to specified desired tightening levels. This is not only a system for quality ensuring, but keeping track of the power wrench working positions relative to a specific car body and/or screw joint position on the car body and enabling checking of the power wrench operation data used on each screw joint as a way of guaranteeing safety of the end product, namely the motor car.

In US Patent 7,055,233 there is previously described an ultrasonic based location system for a power wrench used on car bodies travelling along an assembly line. This system is able to determine in which car body on the assembly line the power wrench is actually used, and whether the power wrench has been used on screw joints in specified positions on the car body. For instance, it is possible to ascertain whether each screw joint in specified positions on the car body has been tightened or not, and even whether the tightening result for each screw joint is approved or not. This known system is based on reflection from the power tool of ultrasonic waves emitted by stationary sensors located adjacent the assembly line.

EP 2138 861 discloses a system for locating and monitoring objects in harsh RF environments and for reporting at least one condition of the object. The system is used, for example, in monitoring and verifying that certain operations have been performed on components or subassemblies during the production of complex assemblies such as torquing of pressure fittings in an aircraft wheel well. A strain gauge and an ultra-wide band (UWB) pulse signal generator are placed on a wrench used to torque the fittings. The strain senses the torque applied by the wrench, and the pulse signal generator generates UWB pulse signals indicating the location of the fitting and the torque applied to the fitting. The pulse signals are received by UWB radios within the wheel well, which generate location measurements based on the received pulse signals. A processor automatically calculates the location of the fitting being torqued based on the location measurements, and a display produces a 3-dimensional image of the fittings and their torque status. This is achieved by installing extra receivers above the minimum required for performing time delay of arrival (TDOA) processing and then performing signal processing to identify the receiver that is not in LOS with respect to the transmitter. The position receivers are thus with necessity situated locally at the site of operation.

Another type of position determining system is disclosed in US 2007/0040687 which discloses a RFID (Radio Frequency Identification) reader system that has a sensor system associated with an antenna system. The sensor system determines orientation position, velocity, motion and acceleration of RFID tags placed on differnent objects in said antenna system.The RFID reader system takes as input an external sensor reference for physical orientation and dynamically adjusts the reader's antenna system in response thereto. This dynamic adjustment may be made by means of switching antenna polarization, switching between antenna elements having different radiation patterns, or electrically steering a steered-beam antenna to a preferred direction to maintain optimal RFID reading performance.

A problem concerned with the above mentioned ultrasonic based systems, and also with optical systems, resides in the difficulty to communicate with the power wrench in certain screw joint positions, for instance inside a car body, where parts of the car body screen off communication of sound or light signals. Unless extra receivers are arranged at the direct vicinity of the car body, there will be no or poor communication between the power wrench and the stationary signal communicating modules and, hence, no reliable distance responsive signal will be delivered to the evaluation unit. Even the operator himself may screen off the signals in some working positions. Also radio frequency signals may be seriously disturbed by car body parts or by the operator, resulting in poor and less reliable signals from the signal communicating modules to the evaluation unit.

It is an object of the invention to provide a location system including a number of stationary signal communicating modules and a movable signal communicating module carried on a movable object for determining the actual position of the movable object in a three dimensional space and adapted to obtain contact with the object also in difficult to reach positions within the space normally screened off by other objects or surrounding structures.

It is a further object of the invention to provide a location system for determining the actual position of a movable object in a three dimensional space by means of a number of stationary signal communicating modules located in the space and a movable signal communicating module carried on a movable object, wherein one or more of the stationary signal communicating modules are displaceable between two or more positions to obtain contact with the movable signal communicating module carried on a movable object also in difficult to reach positions normally screened off by surrounding structures or objects.

Further objects, features and advantages of the invention will appear from the following specification and claims.

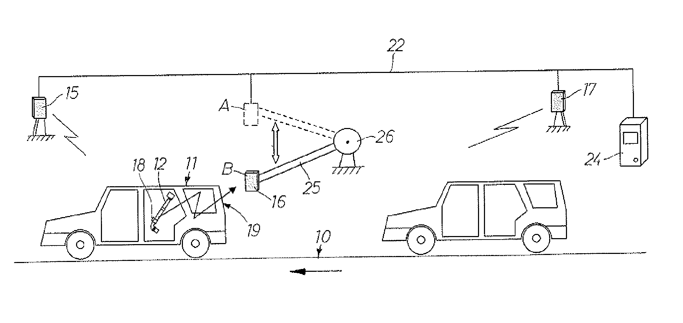

A preferred embodiment of the invention is described below with reference to the accompanying drawing.

In the drawing there is shown a location system according to the invention applied on a three dimensional space at an assembly line 10 with a consecutive row of car bodies travelling along the line. In one of the car bodies 11 there is illustrated a power wrench 12 intended to be used inter alia for tightening screw joints inside the car body 11. A power wrench location system comprises three stationary signal communication modules 15, 16 and 17 located in well defined positions in the space, and one movable signal communication module 18 carried on the power wrench 12. The power wrench 12 is in fact a movable object the position of which is to be determined at certain points of time. The stationary signal communication modules 15, 16 and 17 are connected via wiring 22 to a stationary evaluation and calculating unit 24. The latter also contains means for supplying and receiving operation data from the power wrench 12 via a wireless communication. This wireless operation data communication between the power wrench 12 and the stationary unit 24 does not form a part of the invention and is, therefore, not described in further detail.

The stationary signal communication modules 15, 16 and 17 may be of the type sending out signals to be reflected by the signal communication module 18 attached to the power wrench 12. Alternatively, the movable signal communication module 18 on the power wrench 12 may be a signal communication tag or any other type of device sending out signals to be received by the stationary signal communication modules 15, 16 and 17. In either case the directions of the signals received by the stationary signal communication modules 15, 16 and 17 and the distances between each stationary signal communication module 15, 16 and 17 and the movable signal communication module 18 are indicated and evaluated by the evaluation and calculating unit 24. As a result of that signal evaluation the three dimensional position of the power wrench 12 in the space is determined.

Both the stationary signal communication modules 15, 16 and 17 and the movable signal communication module 18 are designed to emit and/or receive signals in response both to different distances and different directions between the modules. The signal communication module 18 on the power wrench 12 preferably also emits and/or reflects signals in response to its rotational positions of the power wrench 12 in different planes. For instance a signal communication module may be used which is able to indicate its rotational positions in as much as six dimensions of freedom, DOF. This type of the signal communication module is previously known per se and does not form any part of the invention.

Since the power wrench 12 is about to perform a tightening operation inside the car body 11 there are certain parts of the car body 11, the roof for instance, that would screen off the signals emitted by the stationary signal communication modules 15, 16 and 17 or the movable signal communication module 18 on the power wrench 12, which would result in a poor or broken signal communication between the stationary signal communication modules 15, 16 and 17 and the movable module 18 on the power wrench 12 and, hence, a loss of position indication of the power wrench. In order to solve this problem one of the stationary communication modules 16 is displaceable between two or more positions for getting a proper communication with the power wrench 12 inside the car body 11 via a window or door opening in the car body. In the example illustrated in the drawing figure the signal communication module 16 is mounted on a pivoting arm 25 for movement between two well defined positions A and B. The pivoting arm 25 has a stationary pivot point 26. When the power wrench 12 is to tighten screw joints in certain positions inside the car body the signal communication module 16 is displaced from a position A to a position B via a swinging movement of the arm 25 to thereby get a free signal communication way relative to the movable signal communication module 18 on the power wrench 12 through a rear window opening 19 in the car body. The two positions A and B are well defined and their co-ordinates are stored in the evaluation and calculating unit 24.

In the illustrated example the signal communication module 16 is displaceable by means of a pivoting arm, but could as well be moveable otherwise, for instance along a rectilinear rail. The signal communication module 16 could be displaced between more than two specific positions. For instance, it could be successively movable along any certain path or freely in the space to find a favourable signal communication position. Although not described in further detail, the displaceable communication module 16 could be provided with a signal communication tag, and other stationary communication modules 15 and 17 could be adapted to continuously communicate with that signal communication tag, whereby the evaluation and calculating unit 24 could calculate both the momentary position of the signal communication module 16 and the momentary position of the power wrench 12.

In the described example the evaluation and calculating unit 24 is illustrated as a separate unit but may as well be incorporated in one of the stationary communication modules 15 and 17. It is also to be pointed out that the expression "signal communication modules" used throughout the application is meant to involve also mirrors used in some applications at the stationary module locations to reflect optical signals emitted by a light source on the object/power wrench.

Since the assembly line 10 and the car bodies are continuously moving, see illustrating arrow in the drawing, the system including the evaluation and calculation unit 24 has to be programmed to take that movement into account when determining the actual momentary position of the power wrench 12 in relation to the screw joints to be tightened. To that end each car body on the assembly line has been provided with an identification tag which tells the assembly plant system and the local station which type of car body, model etc. is passing through the assembly station and exactly where in the local space the car body is at a certain point of time. The model, etc. of the car body also tells the system exactly where the screw joints to be tightened are located on the car body which is a condition for an accurate and safe ascertainment of where the power wrench is in relation to the screw joints at a certain point of time. The evaluation and calculation unit 24 is programmed to evaluate and determine whether the power wrench 12 has performed an acceptable tightening operation on each of the screw joints by comparing the momentary location of the power wrench 12 with the location of the screw joint to be tightened and with the stored screw joint tightening data to be applied at that very screw joint.

## Claims

1. Location system for determining within a three dimensional space the actual position of a movable object (12), comprising a number of stationary signal communicating modules (15, 16 and 17) located in well defined individual positions in the space, a movable signal communicating module (18) attached to the object (12), and an evaluation unit (24) communicating with the stationary signal communicating modules (15, 16 and 17) and arranged to calculate the actual position of the object (12) based on signals communicated between the stationary signal communicating modules (15, 16 and 17) and the movable signal communicating module (18) and corresponding to the individual distances between and/or angular positions of each one of the stationary signal communicating modules (15, 16 and 17) and the movable signal communicating module (18),
**characterized in that** at least one (16) of the stationary signal communicating modules (15, 16 and 17) is displaceable between two or more positions (A,B) to enable signal communication with the movable signal communicating module (18) on the object (12) in normally screened off positions and that two or more positions of said at least one (16) of the stationary signal communicating modules (15, 16 and 17) are well defined in relation to the positions of the other stationary signal communicating modules (15, 17).

2. Location system according to claim 1, wherein said at least one signal communicating module (16) is mounted on a pivot arm (25) for displacement between two well defined positions (A,B).

3. Location system according to claim 1, wherein the movable signal communicating module (18) is formed by a signal communication tag arranged to respond to an activation signal and to emit signals to reach the stationary signal communicating modules (15, 16 and 17).

4. Location system according to claim 1, wherein the stationary signal communicating modules (15, 16 and 17) and the movable signal communicating module (18) are arranged to respond to an actual multi-dimensional orientation of the object within the three dimensional space.

## Patentansprüche

1. Ortungssystem zur Bestimmung der tatsächlichen Position eines beweglichen Objektes (12) in einem dreidimensionalen Raum, umfassend eine Reihe stationärer signalübertragender Module (15, 16 und 17), die sich in gut-definierten individuellen Positionen in dem Raum befinden, ein bewegliches signalübertragendes Modul (18), das an dem Objekt (12) angebracht ist, und eine Auswerteeinheit (24), die mit den stationären signalübertragenden Modulen (15, 16 und 17) kommuniziert und dazu angeordnet ist, die tatsächliche Position des Objektes (12) basierend auf Signalen zu berechnen, die zwischen den stationären signalübertragenden Modulen (15, 16 und 17) und dem beweglichen signalübertragenden Modul (18) übertragen werden und den individuellen Distanzen zwischen jedem der stationären signalübertragenden Module (15, 16 und 17) und/oder den Winkelpositionen eines jeden der stationären signalübertragenden Modulen (15, 16 und 17) und dem beweglichen signalübertragenden Modul (18) entspricht, **dadurch gekennzeichnet, dass** mindestens eins (16) der stationären signalübertragenden Module (15, 16 und 17) zwischen zwei oder mehr Positionen (A, B) verschoben werden kann, um die Signalübertragung mit dem beweglichen signalübertragenden Modul (18) an dem Objekt (12) in normalerweise abgeschirmten Positionen zu ermöglichen, und dadurch, dass zwei oder mehr Positionen des mindestens einen (16) der stationären signalübertragenden Module (15, 16 und 17) bezogen auf die Positionen der anderen stationären signalübertragenden Module (15, 17) gut-definiert sind.

2. Ortungssystem nach Anspruch 1, wobei das mindestens eine signalübertragende Modul (16) zur Verlagerung zwischen zwei gut-definierten Positionen (A, B) an einem Schwenkarm (25) montiert ist.

3. Ortungssystem nach Anspruch 1, wobei das bewegliche signalübertragende Modul (18) von einem signalübertragenden Tag gebildet wird, das dazu angeordnet ist, auf ein Aktivierungssignal zu reagieren und Signale auszugeben, um die stationären signalübertragenden Module (15, 16 und 17) zu erreichen.

4. Ortungssystem nach Anspruch 1, wobei die stationären signalübertragenden Module (15, 16, und 17) und das bewegliche signalübertragende Modul (18) dazu angeordnet sind, auf eine tatsächliche, mehrdimensionale Ausrichtung des Objektes in dem dreidimensionalen Raum zu reagieren.

## Revendications

1. Système de localisation pour déterminer dans un espace tridimensionnel la position réelle d'un objet mobile (12), comprenant un certain nombre de modules de communication de signaux stationnaires (15, 16 et 17) situés à des positions individuelles bien définies dans l'espace, un module mobile de communication de signaux (18) attaché à l'objet (12) et une unité d'évaluation (24) communiquant avec les modules de communication de signaux stationnaires (15, 16 et 17) et arrangée pour calculer la position réelle de l'objet (12) sur la base de signaux communiqués entre les modules de communication de signaux stationnaires (15, 16 et 17) et le module mobile de communication de signaux (18) et correspondant aux distances individuelles entre et/ou aux positions angulaires de chacun des modules de communication de signaux stationnaires (15, 16 et 17) et du module mobile de communication de signaux (18),
**Caractérisé en ce qu'**au moins un (16) des modules de communication de signaux stationnaires (15, 16 et 17) peut être déplacé entre au moins deux positions (A, B) pour permettre la communication des signaux avec le module mobile de communication de signaux (18) sur l'objet (12) dans des positions normalement inspectées et **en ce que** au moins deux positions dudit au moins un (16) des modules de communication de signaux stationnaires (15, 16 et 17) est bien défini en relation avec les positions des autres modules de communication de signaux stationnaires (15, 17).

2. Système de localisation selon la revendication 1, dans lequel au moins un module de communication (16) est monté sur un bras pivotant (25) pour le déplacer entre deux positions bien définies (A, B).

3. Système de localisation selon la revendication 1, dans lequel le module mobile de communication de signaux (18) est formé d'une étiquette de communication de signaux arrangée pour répondre à un signal d'activation et pour émettre des signaux afin d'atteindre les modules de communication de signaux stationnaires (15, 16 et 17).

4. Système de localisation selon la revendication 1, dans lequel les modules de communication de signaux stationnaires (15, 16 et 17) et le module mobile de communication de signaux (18) sont arrangés pour répondre à une orientation multidimensionnelle réelle de l'objet dans l'espace tridimensionnel.
